# EUROPÄISCHE PATENTSCHRIFT

(11) **EP 3 475 652 B1**
(45) Veröffentlichungstag und Bekanntmachung des Hinweises auf die Patenterteilung: **26.08.2020**
(21) Anmeldenummer: 17731894.6
(22) Anmeldetag: 21.06.2017
(51) Int. Cl.: G01B 21/08, G01B 11/06

(54) **VERFAHREN UND VORRICHTUNG ZUR BESTIMMUNG EINER SCHICHTDICKE EINER ORGANISCHEN SCHICHT AUF EINER OBERFLÄCHE MITTELS INFRAROTSPEKTROSKOPIE**
METHOD AND DEVICE FOR DETERMINING A LAYER THICKNESS OF AN ORGANIC LAYER ON A SURFACE BY MEANS OF INFRARED SPECTROSCOPY
PROCÉDÉ ET DISPOSITIF PERMETTANT DE DÉTERMINER, PAR SPECTROSCOPIE INFRAROUGE, UNE ÉPAISSEUR D'UNE COUCHE ORGANIQUE SUR UNE SURFACE

(30) Priorität: 22.06.2016 DE 102016211191
(43) Veröffentlichungstag der Anmeldung: 01.05.2019
(73) Patentinhaber: Tummuscheit, Michael, 23669 Timmendorfer Strand (DE)
(72) Erfinder: HUTH-FEHRE, Thomas, 35039 Marburg (DE); TUMMUSCHEIT, Michael, 23669 Timmendorfer Strand (DE)
(74) Vertreter: Pfenning, Meinig & Partner mbB
(86) Internationale Anmeldenummer: PCT/EP2017/065284
(87) Internationale Veröffentlichungsnummer: WO 2017/220677

(56) Entgegenhaltungen:
- EP-B1- 1 287 310
- DE-A1- 4 318 767
- US-A- 4 128 681

## Beschreibung

Die Erfindung betrifft ein Verfahren zur Bestimmung einer Schichtdicke einer organischen Schicht auf einer Oberfläche mittels Infrarotspektroskopie und eine Vorrichtung zur Durchführung des Verfahrens.

Die Bestimmung der Schichtdicke einer organischen Schicht auf einer Oberfläche ist z.B. bei der Produktion von Bandaluminium, Aluminiumplatten, Bandstahl oder Stahlplatten insbesondere dann notwendig, wenn die Oberflächen mit Schmierstoffen versehen werden. Das Patent EP 1 287 310 B1 beschreibt ein Verfahren und eine Vorrichtung zur Bestimmung der Dicke von transparenten organischen Schichten. Dabei wird eine beschichtete Oberfläche mit Strahlung, die die organischen Moleküle in der zu messenden Schicht zu einer Grundschwingung anregt, beleuchtet und die zurückgestreute Strahlung wird spektral selektiv in mindestens zwei Wellenlängenbereichen außerhalb des Absorptionswellenlängenbereichs der organischen Moleküle, aber benachbart zu diesem gemessen. Abhängig von diesen Messwerten wird eine Funktion, die die unbeschichtete Oberfläche berücksichtigt, bestimmt und unter Berücksichtigung der detektierten Strahlung und des Absorptionsspektrums der Moleküle der organischen Schicht wird die Dicke der organischen Schicht auf der Oberfläche bestimmt.

Zunehmend finden bei der Produktion von Bandaluminium und -stahl Trockenschmierstoffe in Form von ÖI-Wachs-Gemischen mit unterschiedlichen Wachsanteilen Anwendung. Die Kenntnis der Schichtdicke ermöglicht es, das Aufbringen einer vollständigen und gleichmäßigen Beschichtung auf die Oberfläche zu garantieren, die für die Weiterverarbeitung des Bandstahls erforderlich ist.

Bei der Verwendung von ÖI-Wachs-Gemischen formen die Wachse kristallähnliche Agglomerationen in der Ölphase, wobei in der Folge je nach Auftragsweise des Öl-Wachs-Gemisches auch inhomogene Schichtdicken erzeugt werden. Größe und Anzahl der Agglomerationen sind nicht vorhersehbar und variieren abhängig von der Schichtdicke, von den Temperaturen beim Auftragen der Schicht und beim Auftragen der Schicht mittels Rollen vom Druck der Rolle.

Aus den Agglomerationen und den inhomogenen Schichtdicken resultieren bei Verfahren zur Bestimmung der Schichtdicke des Schmierstoffes, insbesondere bei der Schichtdickenbestimmung mittels optischer Verfahren, Störfaktoren, die zu teilweise erheblichen Abweichungen zwischen der tatsächlichen und der bestimmten Schichtdicke führen:
Die Agglomerationen der Wachse bilden im Öl Bereiche höherer optischer Dichte. Die bei einer Infrarotspektroskopie zur Bestimmung der Schichtdicke auf die Schicht aufgebrachte Strahlung wird an den Agglomerationen gestreut. Der Weg des Lichts durch die Schicht des Öl-Wachs-Gemisches ist damit länger als bei reinen Flüssigkeiten. Dadurch werden die Messergebnisse verfälscht und Schichtdicken mit einer Abweichung von 10-40 % ermittelt.

Wird zum Aufbringen eines Trockenschmierstoffes ein erwärmtes Öl-Wachs-Gemisch auf kaltes Metall gesprüht, kann es zur Tröpfchenbildung kommen. Dabei verfestigt sich der Trockenschmierstoff und bildet Tropfen, bevor sich eine gleichmäßige Schicht auf der Oberfläche ausbilden kann. In der Folge entstehen Bereiche mit unterschiedlicher Schichtdicke und Bereiche, in denen die Oberfläche nicht mit dem Trockenschmierstoff bedeckt ist. Soll die Schichtdicke mittels Infrarotspektroskopie bestimmt werden, trifft die auf die Schicht aufgebrachte Strahlung sowohl auf Ansammlungen von Tropfen, in denen die Absorption in Sättigung geht, als auch auf unbeschichtete Bereiche. Die Ergebnisse der Schichtdickenbestimmung sind infolgedessen deutlich zu gering. In Abhängigkeit von den Parametern beim Aufsprühen des Trockenschmierstoffes können sich Abweichungen von bis zu 90 % ergeben.

Befindet sich der Schmierstoff zwischen zwei Blechen und diese Bleche werden auseinandergenommen, wie es beim Abrollen eines zu einem Coil geformten Bandaluminiums oder Bandstahls der Fall ist, klebt der Schmierstoff zwischen den Blechen und wird auseinander gezogen. Dabei bilden sich zunächst Fäden, die länger und dünner werden und letztlich reißen. Nach dem Abriss der Fäden bilden sich an diesen Stellen punktuelle Erhebungen in der Schicht. Diese sind in ihrem Durchmesser zwar größer als die Durchmesser der Tropfen bei der Tröpfchenbildung von Sprühverfahren, dennoch ergeben sich bei einer Schichtdickenbestimmung zu geringe Schichtdicken mit Abweichungen von bis zu 50 %.

Der Erfindung liegt daher die Aufgabe zugrunde, ein Verfahren und eine Vorrichtung zur Bestimmung einer Schichtdicke einer organischen Schicht auf einer Oberfläche vorzuschlagen, bei denen die tatsächliche Dicke einer organischen, aus einem Stoffgemisch gebildeten Schicht auf einer Oberfläche trotz Inhomogenitäten und Störstellen zuverlässig bestimmt werden kann.

Die Aufgabe wird erfindungsgemäß mit einem Verfahren, das die Merkmale des Anspruchs 1 aufweist, und einer Vorrichtung nach Anspruch 9 gelöst. Vorteilhafte Ausgestaltungen und Weiterbildungen sind in den abhängigen Ansprüchen offenbart.

Bei dem erfindungsgemäßen Verfahren zur Bestimmung einer Schichtdicke einer aus einem organischen Stoffgemisch auf einer Oberfläche gebildeten Schicht durch Infrarotspektroskopie wird an mindestens einem Messpunkt mittels einer Messeinrichtung, die zur Durchführung einer Infrarotspektroskopie geeignet ist, eine erste Schichtdicke, die in der folgenden Beschreibung auch als Rohschichtdicke bezeichnet wird, bestimmt. Die Beschichtung muss dabei für elektromagnetische Strahlung im Wellenlängenbereich des infraroten Lichts durchlässig sein.

In einem zweiten Schritt wird die Beschichtung an dem mindestens einen Messpunkt mittels einer Heizeinrichtung erwärmt, so dass der Schmelzpunkt des höchstschmelzenden Stoffes in dem Stoffgemischt erreicht wird. Dadurch werden Agglomerationen, die sich beim Aufbringen von Öl-Wachs-Gemischen bilden, aufgeschmolzen und es werden eine gleichmäßige Verteilung der Stoffe im Stoffgemisch sowie eine gleichmäßige Schichtdicke im Bereich des mindestens einen Messpunktes erreicht.

Nach dem Ende der Erwärmung, d.h. nach dem vollständigen Aufschmelzen und/oder dem Erstarren der Schicht im Bereich des mindestens einen Messpunktes wird eine zweite Schichtdicke bestimmt.

Aus dem Verhältnis der ersten (Rohschichtdicke) und der zweiten Schichtdicke an dem mindestens einen Messpunkt wird ein Kalibrierfaktor zur Bestimmung der tatsächlichen Dicke der Schicht an beliebigen Messpunkten der beschichteten Oberfläche ermittelt.

Wie angegeben wurde, kann die zweite Schichtdicke abhängig von der Messung im Zustand der vollständigen Schmelze und/oder nach dem Wiedererstarren ermittelt werden. Das Messen der rückgestrahlten Strahlung im Zustand der vollständigen Schmelze bringt einige Vorteile mit sich. So kann die für den gesamten Vorgang der Messung benötigte Zeit verringert werden, da nicht die Abkühlung der zur Schmelze gebrachten Schicht abgewartet werden muss. Da der Messpunkt nach dem Schmelzen nicht verlassen werden muss, was notwendig wäre, wenn er ohne Bestrahlung abgekühlt werden soll, müssen weniger Fahrbewegungen zum Wiederanfahren des Messpunktes durchgeführt werden, wodurch auch Anfahrfehler verringert werden. Dadurch, dass die Schmelze völlig transparent ist, ist die im Stand der Technik bekannte "normale" Ölkalibration gültig, wodurch weniger Kalibrationsaufwand gegeben ist. Weiterhin ist die Messung an der transparenten Schicht genauer, da keine Rückstreuung der Messstrahlung in der Schicht selber auftritt. Ein Vorteil der Messung der zweiten Schichtdicke nach dem Wiedererstarren der Schicht liegt darin, dass das Heizen und Messen zeitlich nacheinander durchgeführt werden kann, wodurch die Heizeinrichtung und die Messeinrichtung flexibler gestaltet werden können.

Aus der mittels der Messeinrichtung an mindestens einem beliebigen Punkt der Oberfläche bestimmten Schichtdicke und dem Kalibrierfaktor wird dann die tatsächliche Dicke der Schicht an beliebigen Messpunkten bestimmt.

Damit bei dem erfindungsgemäßen Verfahren die tatsächlichen Schichtdicken mithilfe des Kalibrierfaktors korrekt bestimmt werden können, sollten die Parameter der Beschichtung und des Aufbringens der Beschichtung auf einer Oberfläche konstant gehalten werden.

Der zur Korrektur der an einem beliebigen Messpunkt gemessenen Schichtdicke verwendete Kalibrierfaktor kann mittels nur eines Messpunktes ermittelt werden, es können jedoch auch aus den Messsignalen der Spektralmessung an mehreren, relativ zur Oberfläche verteilten Messpunkten bzw. aus deren Kalibrierfaktoren ein globaler Kalibrierfaktor, der z.B. für das gesamte Coil gilt, bestimmt werden. Bevorzugt können die Messpunkte dabei auf einer Linie oder in einem Muster angeordnet sein. Dabei kann ein globaler Kalibrierfaktor gegebenenfalls mittels Interpolation oder Mittelwertbildung der je Messpunkt ermittelten Kalibrierfaktoren bestimmt werden.

Es hat sich gezeigt, dass der Korrekturfaktor mit einer stetigen Funktion von der Schichtdicke abhängt. Je dicker die Schicht ist, desto größer ist die Mehrfachstreuung und ein zunehmender Teil der Messstrahlung wird in der Schicht zurückgestreut und erreicht so die Metalloberfläche nicht mehr, wodurch das Messsignal bei dickeren Schichten zunehmend in die Sättigung geht. Eine andere Möglichkeit der Bestimmung des globalen Kalibrierfaktors ergibt sich somit aus der Verwendung von Polynomen als Funktionen. An je mehr verschieden dick beschichteten Orten der Kalibrierfaktor gemessen werden kann, desto besser kann die Funktion bestimmt werden. Beispielsweise könnten in der Praxis drei Messpunkte erfasst werden, in diesem Fall könnte ein Polynom 2. Grades zum Einsatz kommen.

Bei dem erfindungsgemäßen Verfahren kann die beschichtete Oberfläche mit elektromagnetischer Strahlung im Bereich des infraroten Lichts bestrahlt und das Spektrum der zurückgestreuten Strahlung erfasst werden. Unter Berücksichtigung der Reflexions- und Absorptionseigenschaften der Oberfläche und der Schicht, sowie des erfassten Spektrums kann mithilfe des Lambert-Beer'schen Gesetzes die Schichtdicke bestimmt werden.

Während des Erwärmens der Schicht an dem mindestens einen Messpunkt kann gleichzeitig das Spektrum der zurückgestreuten Strahlung und die Veränderungen des Spektrums während des Erwärmens gemessen werden. Aus der Veränderung des Spektrums kann das Ende der Erwärmung bestimmt werden. Auf diese Weise ist es möglich, bei der Erwärmung bzw. dem Aufschmelzen Zeit und Energie einzusparen. In einer alternativen Variante des Verfahrens kann das Ende des Erwärmens durch die Vorgabe einer Dauer zur Erwärmung der Schicht bestimmt werden.

Mit dem erfindungsgemäßen Verfahren können bevorzugt Schichtdicken auf rauen Metalloberflächen, insbesondere auf Bandaluminium oder Bandstahl bestimmt werden. Dabei sollte die Bestimmung der ersten (Rohschichtdicke) und zweiten Schichtdicke an mindestens einem Messpunkt zur Bestimmung des Kalibrierfaktors bevorzugt am Anfang und/oder am Ende eines Coils vorgenommen werden. Dafür muss das Metallband während der Bestimmung der ersten und zweiten Schichtdicke und der dazwischen stattfindenden Erwärmung bis zum Schmelzpunkt und ggf. Erstarrung der Schicht angehalten werden.

Da, wie ausgeführt, die Bestimmung des Kalibrierfaktors nur am stehenden Band durchgeführt werden kann und die meisten Bandanlagen nur kurze Stillstandszeiten haben, muss der gesamte Messprozess so kurz und flexibel wie möglich sein, um die gesamte zur Verfügung stehende Zeit zur Optimierung der Genauigkeit nutzen zu können. So können beispielsweise mehrere Messungen der Rohschichtdicke (erste Schichtdicke) entlang einer Linie über die gesamte von der Messeinrichtung überstrichene Bandbreite der Traverse während der Bewegung der Messeinrichtung in rascher Folge aufgenommen werden. Es können dann die Orte der Extrema, z.B. Maximum und Minimum, der Rohschichtdicken sowie die für häufig auftretenden Schichtdicken repräsentativen Orte ermittelt werden. Anschließend können dann die Orte der Extrema angefahren und die Messungen unter Beobachtung der spektralen Reflektivität bei geschmolzener und/oder wieder erstarrter Schicht durchgeführt werden. Bei eventuell danach noch verbleibender Bandstillstandszeit können weitere repräsentative Orte angefahren, geschmolzen, ggf. wieder erstarrt und gemessen werden.

Die Bestimmung der Schichtdicken an beliebigen Messpunkten kann bei laufendem Metallband durchgeführt werden.

Wird der Kalibrierfaktor bereits am Anfang eines Coils bestimmt, können die tatsächlichen Schichtdicken an beliebigen Punkten mithilfe des Kalibrierfaktors bereits während der des Durchlaufs des Metallbandes festgestellt werden. Wird hingegen der Kalibrierfaktor erst am Ende des Coils bestimmt, müssen die mittels Messeinrichtung bestimmten Schichtdicken, die an beliebigen Punkten gemessen werden, zunächst dokumentiert oder gespeichert werden und die tatsächlichen Schichtdicken können erst berechnet werden, nachdem der Kalibrierfaktor gefunden wurden.

Das erfindungsgemäße Verfahren ist besonders geeignet zur Bestimmung der Dicke von Schichten, die als Trockenschmierstoff aus einem Gemisch von Öl(en) und Wachs(en) gebildet sind.

Eine erfindungsgemäße Vorrichtung zur Bestimmung einer Schichtdicke einer organischen, für elektromagnetische Strahlung im Wellenlängenbereich infraroten Lichts durchlässige, aus einem Stoffgemisch gebildeten Schicht auf einer Oberfläche mittels Infrarotspektroskopie weist zumindest eine Messeinrichtung und eine Auswerteeinheit auf.

Die Messeinrichtung ist zur Durchführung einer Infrarotspektroskopie ausgebildet und weist zumindest eine Strahlungsquelle und eine Empfängeranordnung auf. Die Vorrichtung umfasst weiterhin eine Auswerteeinheit zur Bestimmung der Schichtdicke abhängig von Messsignalen der Empfängeranordnung.

In einer erfindungsgemäßen Vorrichtung ist zudem eine Heizeinrichtung umfasst, die ausgebildet ist, die Schicht an mindestens einem vorgegebenen Messpunkt bis zum Schmelzpunkt des höchstschmelzenden Stoffes des Stoffgemisches zu erwärmen.

Die Auswerteeinheit ist ausgebildet, aus den Messsignalen an dem mindestens einen vorgegebenen Messpunkt vor dem Erwärmen eine erste Schichtdicke und nach dem Erwärmen und Erstarren der Schicht eine zweite Schichtdicke, und daraus einen Kalibrierfaktor zu bestimmen, und aus dem Kalibrierfaktor und Messsignalen an einem beliebigen Punkt die Schichtdicke an diesem beliebigen Messpunkt zu bestimmen.

Die Strahlungsquelle sollte während der Messung des Spektrums der zurückgestreuten Strahlung mit Unterspannung betrieben werden, um eine ungewünschte Erwärmung der Beschichtung während der Messung bzw. ein undefiniertes Teilaufschmelzen zu vermeiden und um im Optimum der Planck'schen Strahlungskurve, d. h. mit höchstmöglichem Wirkungsgrad zu arbeiten.

Die Messeinrichtung und/oder die Heizeinrichtung kann/können in einer definierten Anordnung über der Oberfläche positionierbar ausgebildet sein. Dazu können die Messeinrichtung und/oder die Heizeinrichtung mittels einer Positioniereinrichtung, wie beispielsweise einer Traverse, über der Oberfläche bewegt werden.

Die Positioniereinrichtung kann bezogen auf die beschichtete Oberfläche ortsfest angeordnet sein und dabei die Messeinrichtung und/oder die Heizeinrichtung über die Oberfläche bewegen. Wird ein Metallband durch die Positioniereinrichtung hindurchgeführt, kann die Messung der Schichtdicke an beliebigen Messpunkten in Form einer Pendelbewegung über die Oberfläche erreicht werden. Eine Positioniereinrichtung kann bezogen auf eine beschichtete Oberfläche auch verfahrbar ausgebildet sein, so dass die Schichtdicken an beliebigen Messpunkten auf ortsfesten, aber auch auf bewegten Oberflächen bestimmt werden können.

Eine erfindungsgemäße Vorrichtung kann eine Steuereinrichtung aufweisen, die geeignet ist, die Messeinrichtung zur Bestimmung der ersten und zweiten Schichtdicke an mindestens einem Messpunkt oder an beliebigen Messpunkten zu steuern. Sie kann zudem geeignet sein, die Heizeinrichtung zur Erwärmung der Schicht zu steuern und zu überwachen. Dabei kann die Erwärmung nach einer vorgegebenen Zeit beendet werden oder das Ende der Erwärmung anhand der Veränderungen des erfassten Spektrums während der Erwärmung bestimmt werden.

Weiterhin kann die Steuereinrichtung ausgebildet sein, die Positioniereinrichtung zu steuern. Alternativ kann die Positionierung der Messeinrichtung und/oder der Heizeinrichtung auch manuell durchgeführt werden.

Eine Heizeinrichtung kann ein Induktionsheizgerät, ein Infrarotheizgerät, ein Heißluftgebläse oder die Strahlungsquelle der Messeinrichtung selbst sein.

Die Strahlungsquelle der Messeinrichtung kann so ausgebildet sein, dass sie während der Messung des Spektrums der zurückgestreuten Strahlung mit Unterspannung betreibbar ist.

Die Messeinrichtung und die Heizeinrichtung können in einer Variante der erfindungsgemäßen Vorrichtung zusammen in einem Messkopf angeordnet sein und so als Einheit über der Oberfläche positioniert werden. Um die Schmelzzeit zu verkürzen, kann je eine Heizeinrichtung bzw. je ein Mess- oder Heizkopf über und unter dem Metallband angeordnet sein. Beide Heizeinrichtungen können synchron fahren, so dass jeder Schmelzfleck von beiden Bandseiten gleichzeitig aufgeheizt wird.

Das erfindungsgemäße Verfahren und die erfindungsgemäße Vorrichtung erlauben die Bestimmung der tatsächlichen Dicke einer Schicht auf einer Oberfläche trotz in der Beschichtung vorhandener Inhomogenitäten und Agglomerationen sowohl für ortsfest angeordnete Oberflächen als auch für bewegte Oberflächen wie Metallbänder.

Nachfolgend werden Ausführungsbeispiele des Verfahrens und der Vorrichtung anhand der Zeichnung näher erläutert. Es zeigen
- Figur 1: eine Prinzipdarstellung einer beispielhaften Ausführung einer erfindungsgemäßen Vorrichtung zur Bestimmung einer Schichtdicke nach dem erfindungsgemäßen Verfahren, und
- Figur 2: eine Prinzipdarstellung einer beispielhaften Ausführung einer erfindungsgemäßen Messeinrichtung .

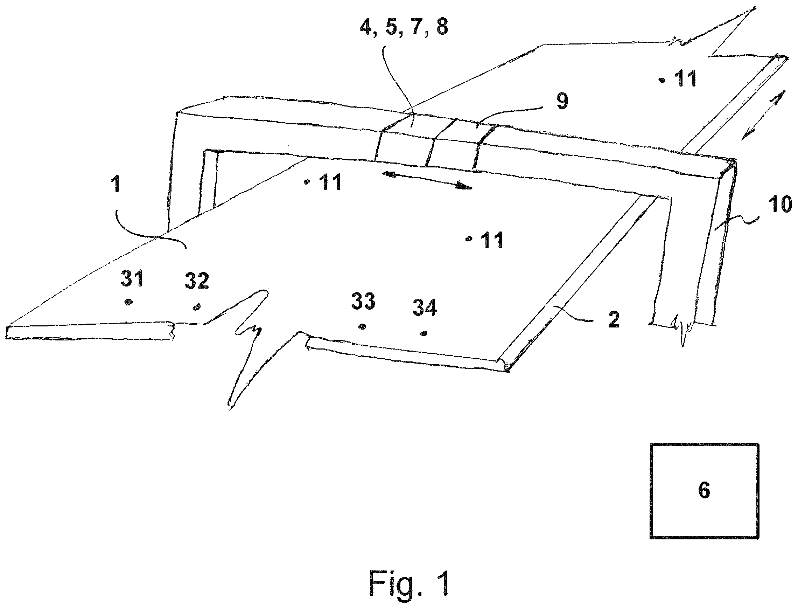

In Figur 1 ist eine Vorrichtung zur Bestimmung der Schichtdicke eines Öl-Wachs-Gemisches auf einem Metallband 2 in Coil-Form dargestellt.

Über dem Metallband 2 sind an einer als Traverse ausgebildeten Positioniereinrichtung 10 eine Messeinrichtung 4 und eine Heizeinrichtung 9 angeordnet, die von einer Steuereinrichtung 6 gesteuert werden und entlang der Positioniereinrichtung 10 quer zur Bewegungsrichtung des Metallbands 2 über das Metallband 2 bewegt werden können. Auch die Anordnung der Positioniereinrichtung 10 über der Oberfläche des Metallbands 2 entlang seiner Bewegungsrichtung wird durch die Steuereinrichtung 6 gesteuert. Die Bewegungsrichtungen sind jeweils mit Pfeilen in Figur 1 dargestellt.

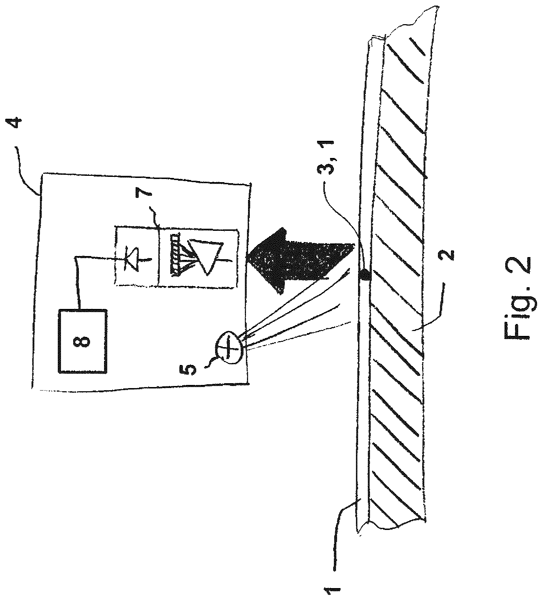

Die Messeinrichtung 4 umfasst, wie in Fig. 2 dargestellt, eine Strahlungsquelle 5, eine Empfängeranordnung 7 und eine Auswerteeinheit 8. Die Empfängeranordnung 7 kann beispielsweise ein Prismenspektrograph sein, aber auch andere Spektrometerprinzipien, wie die Filterung des Lichts mittels Bandpassfiltern, können Verwendung finden.

Die Auswerteeinrichtung 8 kann ein externer Computer sein, es können aber auch ein oder mehrere Mikroprozessoren oder -controller vorgesehen sein, die zusammen mit der Empfängeranordnung 7 in einem Gehäuse der Messeinrichtung 4 aufgenommen sind. Wie in Figur 2 gezeigt, sind in der hier gezeigten beispielhaften Ausführungsform die Strahlungsquelle 5, die Empfängeranordnung 7 und die Auswerteeinheit 8 in der Messeinrichtung 4 angeordnet.

Die Heizeinrichtung 9 ist in der beispielhaften Ausführungsvariante als Infrarotheizgerät ausgebildet.

Auf der Oberfläche des Metallbandes 2 ist eine Schicht 1 eines Öl-Wachs-Gemisches aufgebracht.

Für eine Messung der Schichtdicke mittels der Messeinrichtung 4 läuft das Coil-Metallband 2 üblicherweise in eine durch den Pfeil angegebene Richtung, um an einem beliebigen Messpunkt 11 für die Erfassung der Dicke der Schicht des aufgebrachten Öl-Wachs-Gemisches Messsignale aufzunehmen.

Gemäß dem Verfahren nach der Erfindung wird zur Erhöhung der Genauigkeit der Schichtdickenmessung ein Kalibrierfaktor bestimmt, der Unebenheiten und Anisotropien der Schicht über die Fläche des Metallbands 2 berücksichtigt. Zur Bestimmung des Kalibrierfaktors zur Ermittlung der Schichtdicke an beliebigen Punkten 11 sind Messpunkte 3.1, 3.2, 3.3, 3.4 vorgegeben, die beispielsweise auf einer Linie am Anfang des Coil-Metallbands 2 angeordnet sind. Für diese Bestimmung wird die Bewegung des Metallbands angehalten.

Die Strahlungsquelle 5 bestrahlt die Oberfläche in einem Messpunkt 3.1 am Anfang des Coils-Metallband 2 mit elektromagnetischer Strahlung im Wellenlängenbereich des infraroten Lichts. Die Wellenlänge der aufgebrachten infraroten Strahlung kann beispielsweise im Bereich von 3,5 µm liegen, da in diesem Bereich der Grundschwingungen der C-H-Bindung die Absorption am stärksten ist und damit optimal zur Messung sehr dünner Schichten geeignet ist. Bei Verwendung eines sehr rauscharmen Messaufbaus ist im Prinzip auch die Verwendung der 1. Harmonischen dieser Schwingung denkbar. Diese liegt bei ca. 1700 nm im Bereich des Nahinfraroten.

Die elektromagnetische Strahlung durchdringt die Schicht 1 des Öl-Wachs-Gemisches und wird dabei zumindest teilweise an Agglomerationen des Wachses in der Schicht 1 gestreut. Ein Teil der elektromagnetischen Strahlung wird an der Oberfläche des Metallbands 2 reflektiert und durchquert die Schicht 1 ein zweites Mal. Dabei wird auch die reflektierte Strahlung teilweise an den Wachs-Agglomerationen gestreut.

Die von der Schicht 1 und der Oberfläche des Metallbands 2 in den verschiedenen Wellenlängen zurückgestreute Strahlung wird durch die Empfängeranordnung 7 eingesammelt, in elektrische Signale umgewandelt und der Auswerteeinrichtung 8 zugeführt.

Das Spektrum der zurückgestreuten Strahlung bei einer Wellenlänge der aufgebrachten infraroten Strahlung im Bereich von 3,5 µm weist ein Maximum der Extinktion oder Absorption im Bereich von 3,4 µm bis 3,45 µm und ein Nebenmaximum im Bereich von 3,5 µm auf.

Mithilfe des Lambert-Beer'schen-Gesetzes wird nun durch die Auswerteeinrichtung 8 aus dem Spektrum der zurückgestreuten Strahlung und unter Berücksichtigung der Reflexions-und Absorptionseigenschaften des Öl-Wachs-Gemischs der Schicht 1 und des Metallbands 2 eine erste Schichtdicke, auch Rohschichtdicke genannt, des Öl-Wachs-Gemisches 1 auf dem Metallband 2 im Messpunkt 3.1 bestimmt.

Anschließend wird die Schicht 1 im Bereich des Messpunktes 3.1 durch die Heizeinrichtung 9 bis zum Schmelzpunkt des Wachses erwärmt. Die Erwärmung erfolgt zeitgesteuert, d.h. die Heizeinrichtung bestrahlt die Schicht 1 über eine vorgegebene Zeitdauer. Dabei schmilzt die Schicht 1 des Öl-Wachs-Gemisches und damit die darin enthaltenen Agglomerationen des Wachses auf. Durch das Aufschmelzen der Schicht bis zum Schmelzpunkt werden eine gleichmäßige Verteilung des Wachses in dem Öl-Wachs-Gemisch und eine gleichmäßige Schichtdicke im Bereich des Messpunktes 3.1 erreicht.

Nach dem Ende der Erwärmung der Schicht 1 in dem Messpunkt 3.1 und/oder einer zeitlich vorgegebenen Wartezeit zum Erstarren der Schicht 1 wird der Messpunkt 3.1 erneut mit elektromagnetischer Strahlung mit Wellenlängen im Bereich von 3,5 µm bestrahlt und die zurückgestreute Strahlung durch die Empfängeranordnung 7 eingesammelt, in elektrische Signale umgewandelt und an die Auswerteeinheit 8 übermittelt. Analog zu der Rohschichtdicke wird nun aus dem Spektrum der zurückgestrahlten Strahlung und mittels des Lambert-Beer'schen Gesetzes eine zweite Schichtdicke der Schicht 1 auf dem Metallband 2 bestimmt. Aus der Rohschichtdicke und der zweiten Schichtdicke und Berücksichtigung der Extinktionseigenschaften des Öl-Wachsgemisches bestimmt die Auswerteeinheit 8 einen Kalibrierfaktor für den Punkt 3.1.

Im Anschluss werden die Messeinrichtung und die Heizeinrichtung verfahren und in analoger Weise werden jeweils die Rohschichtdicken und zweiten Schichtdicken für den aufgeschmolzenen und/oder den wieder erstarrten Zustand in den Messpunkten 3.2, 3.3 und 3.4 bestimmt, die auf einer Linie am Anfang des Coils angeordnet sind. Aus den jeweiligen ersten (Rohschichtdicke) und zweiten Schichtdicken wird durch die Auswerteeinheit 8 unter Bildung des Verhältnisses jeweils ein Kalibrierfaktor pro Messpunkt 3.2, 3.3 und 3.4 ermittelt.

Durch die Auswerteeinheit 8 kann ein globaler Kalibrierfaktor für die Bestimmung der tatsächlichen Schichtdicken an beliebigen Messpunkten 11 auf der Oberfläche des Metallbands 2 ermittelt werden. Wenn sich die entlang der Linie gemessenen Rohschichtdicken wenig von einander unterscheiden, reicht es aus, den Mittelwert der einzelnen Kalibrierfaktoren als globalen Kalibrierfaktor für das gesamte Coil zu benutzen. Unterscheiden sich die entlang der Linie gemessenen Kalibrierfaktoren bzw. die die Schichtdicken angebenden Messsignale jedoch deutlich voneinander, so ist durch Fitten diejenige Funktion zu ermitteln, die die Rohschichtdickenabhängigkeit des Kalibrierfaktors am besten annähert.

Zur Bestimmung tatsächlicher Schichtdicken an beliebigen Messpunkten 11 auf dem Metallband 2 wird die Schicht 1 an den beliebigen Messpunkten 11 mit elektromagnetischer Strahlung mit Wellenlängen im Bereich von 3,5 µm bestrahlt und die zurückgestreute Strahlung mittels der Empfängeranordnung 7 eingesammelt, in elektrische Signale umgewandelt und an die Auswerteeinheit 8 übermittelt. Der Metallband 2 bewegt sich dabei an der Messeinrichtung 4 vorbei.

Die Auswerteeinheit 8 bestimmt aus dem Spektrum der zurückgestreuten Strahlung in den beliebigen Messpunkten 11 und dem globalen Kalibrierfaktor die tatsächliche Schichtdicke der Schicht 1 auf dem Metallband 2 an jedem der beliebigen Messpunkte 11. Dabei wird die oben erwähnte Funktion des Kalibrierfaktors über die Rohschichtdicke verwendet und der an dem beliebigen Ort gemessene Rohschichtdickenwert als x-Wert in die Kalibrierfaktorfunktion eingesetzt, so der zugehörige Kalibrierfaktor ermittelt und der Rohschichtdickenwert zur Bestimmung der tatsächlichen Schichtdicke letztlich mit dem für ihn ermittelten Kalibrierfaktor multipliziert.

## Patentansprüche

1. Verfahren zur Bestimmung einer Schichtdicke einer organischen, für elektromagnetische Strahlung im Wellenlängenbereich des infraroten Lichts durchlässigen, aus einem Stoffgemisch gebildeten Schicht (1) auf einer Oberfläche (2) durch Infrarotspektroskopie, wobei
mittels einer Messeinrichtung (4) zur Durchführung einer Infrarotspektroskopie an mindestens einem Messpunkt (3) eine erste Schichtdicke bestimmt wird, und
die Schicht (1) an dem mindestens einen Messpunkt (3) mittels einer Heizeinrichtung (9) bis zum Schmelzpunkt des höchstschmelzenden Stoffes des Stoffgemisches erwärmt wird, und
nach dem vollständigen Aufschmelzen und/oder nach dem Erstarren der Schicht (1) eine zweite Schichtdicke an dem mindestens einen Messpunkt (3) bestimmt wird, und
aus dem Verhältnis der ersten und der zweiten Schichtdicke an dem mindestens einen Messpunkt (3) ein Kalibrierfaktor für die Bestimmung der Dicke der Schicht (1) an beliebigen Punkten der beschichteten Oberfläche (2) ermittelt wird, und
die Dicke der Schicht (1) an einem beliebigen Punkt (11) der Oberfläche (2) aus einer mittels der Messeinrichtung (4) an dem beliebigen Punkt (11) bestimmten Schichtdicke und dem Kalibrierfaktor bestimmt wird.

2. Verfahren nach Anspruch 1, **dadurch gekennzeichnet, dass** ein globaler Kalibrierfaktor aus mehreren, an relativ zur Oberfläche (2) verteilten, bevorzugt auf einer Linie oder in einem Muster angeordneten Messpunkten (3) ermittelten Kalibrierfaktoren, bevorzugt über einen Mittelwert oder eine von der Schichtdicke abhängigen Funktion, aus diesen je Messpunkt (3) ermittelten Kalibrierfaktoren bestimmt wird.

3. Verfahren nach einem der vorhergehenden Ansprüche, **dadurch gekennzeichnet, dass**
die beschichtete Oberfläche (2) mit elektromagnetischer Strahlung im Wellenlängenbereich des infraroten Lichts bestrahlt wird,
das Spektrum der zurückgestreuten Strahlung erfasst, und
unter Berücksichtigung der Reflexions-und Absorptionseigenschaften der Oberfläche (2) und der Schicht (1) sowie des erfassten Spektrums die jeweiligen Schichtdicken bestimmt werden.

4. Verfahren nach Anspruch 3, **dadurch gekennzeichnet, dass** während der Erwärmung und dem Aufschmelzen der Schicht (1) an mindestens einem Messpunkt (3) Veränderungen im Spektrum der zurückgestreuten Strahlung gemessen werden und daraus das Ende der Erwärmung bestimmt wird.

5. Verfahren nach einem der vorhergehenden Ansprüche, **dadurch gekennzeichnet, dass** die Dicke einer Schicht (1) auf rauen Metalloberflächen, vorzugsweise auf einem Metallband bestimmt wird.

6. Verfahren nach einem der vorhergehenden Ansprüche, **dadurch gekennzeichnet, dass** eine erste und eine zweite Schichtdicke einer Schicht (1) auf einem Metallband zur Ermittlung eines Kalibrierfaktors am Anfang und/oder am Ende eines Coil-Metallbands bestimmt werden.

7. Verfahren nach einem der vorhergehenden Ansprüche, **dadurch gekennzeichnet, dass** die Schicht (1) als Trockenschmierstoff aus einem Gemisch von Öl(en) und Wachs(en) gebildet wird.

8. Verfahren nach einem der vorhergehenden Ansprüche, **dadurch gekennzeichnet, dass** bei der Messung der ersten Schichtdicke an mehreren Messpunkten der Ort der Schichtdickenextrema und ggf. mindestens ein für häufig auftretende Schichtdicken repräsentativer Ort ermittelt werden und dass zum Aufschmelzen zuerst die Orte der Schichtdickenextrema und ggf. anschließend der für häufig auftretende Schichtdicken repräsentative Ort ausgewählt werden.

9. Vorrichtung zur Bestimmung einer Schichtdicke einer organischen, für elektromagnetische Strahlung im Wellenlängenbereich des infraroten Lichts durchlässigen, aus einem Stoffgemisch gebildeten Schicht (1) auf einer Oberfläche (2) durch Infrarotspektroskopie, die zumindest
eine Messeinrichtung (4) zur Durchführung einer Infrarotspektroskopie, die zumindest eine Strahlungsquelle (5) und eine Empfängeranordnung (7) aufweist, sowie eine Auswerteeinheit (8) zur Bestimmung der Schichtdicke abhängig von Messsignalen der Empfängeranordnung (7) umfasst,
**dadurch gekennzeichnet, dass** eine Heizeinrichtung (9), die zur Erwärmung der Schicht (1) an mindestens einem vorgegebenen Messpunkt (3) bis zum Schmelzpunkt des höchstschmelzenden Stoffes des Stoffgemisches ausgebildet ist, umfasst ist und
die Auswerteeinheit (8) ausgebildet ist,
aus den Messsignalen an dem mindestens einen vorgegebenen Messpunkt (3) vor dem Erwärmen eine erste Schichtdicke und nach dem vollständigen Aufschmelzen und/oder Erstarren der Schicht (1) eine zweite Schichtdicke und daraus einen Kalibrierfaktor zu bestimmen, und
aus dem Kalibrierfaktor und Messsignalen an einem beliebigen Punkt (11) die Schichtdicke an diesem beliebigen Punkt (11) zu ermitteln.

10. Vorrichtung nach Anspruch 9, **dadurch gekennzeichnet, dass** die Messeinrichtung (4) und/oder die Heizeinrichtung (9), bevorzugt mittels einer Positioniereinrichtung (10) in einer definierten Anordnung über die Oberfläche (2) bewegbar sind.

11. Vorrichtung nach einem der Ansprüche 9 oder 10, **dadurch gekennzeichnet, dass** sie eine Steuereinrichtung (6) aufweist, die ausgebildet ist, die Abläufe zur Bestimmung eines Kalibrierfaktors in mindestens einem Messpunkt (3) und/oder zur Bestimmung einer Schichtdicke an einem beliebigen Punkt (11) und/oder die Positionierung der Positioniereinrichtung (10) zu steuern.

12. Vorrichtung nach einem der Ansprüche 9 bis 11, **dadurch gekennzeichnet, dass** eine Heizeinrichtung (9) ein Induktionsheizgerät, ein Infrarotheizgerät, ein Heißluftgebläse oder die Strahlungsquelle (5) der Messeinrichtung (4) ist.

13. Vorrichtung nach einem der Ansprüche 9 bis 12, **dadurch gekennzeichnet, dass** die Strahlungsquelle (5) der Messeinrichtung (4) während der Messung des Spektrums der zurückgestreuten Strahlung mit Unterspannung betreibbar ist.

14. Vorrichtung nach einem der Ansprüche 9 bis 13, **dadurch gekennzeichnet, dass** die Messeinrichtung (4) und die Heizeinrichtung (9) zusammen in einem Messkopf angeordnet sind.

15. Vorrichtung nach einem der Ansprüche 9 bis 14, **dadurch gekennzeichnet, dass** die Oberfläche diejenige eines Metallbandes ist und dass oberhalb und unterhalb des Metallbandes eine Heizeinrichtung zum Erwärmen der Schicht (1) an dem mindestens einen Messpunkt (3) vorgesehen ist.

## Claims

1. A method for determining a layer thickness of an organic layer (1), which is permeable for electromagnetic radiation in the wavelength range of infrared light and which is formed from a material mixture, on a surface (2), by infrared spectroscopy, wherein
a first layer thickness is determined at least at one measuring point (3) by means of a measuring device (4) for carrying out infrared spectroscopy, and
the layer (1) is heated at the at least one measuring point (3) by means of a heating device (9) up to the melting point of the highest-melting material of the material mixture, and
once the layer (1) has fully melted and/or has solidified, a second layer thickness is determined at the at least one measuring point (3), and
a calibration factor for determining the thickness of the layer (1) at arbitrary points of the coated surface (2) is established from the ratio between the first and the second layer thickness at the at least one measuring point (3), and
the thickness of the layer (1) at an arbitrary point (11) of the surface (2) is determined from a layer thickness determined at the arbitrary point (11) by means of the measuring device (4) and from the calibration factor.

2. The method according to claim 1, **characterized in that** a global calibration factor is determined from a plurality of calibration factors established at measurement points (3) distributed relative to the surface (2), preferably arranged on a line or in a pattern, preferably via a mean value or a layer-thickness-dependent function, formed from these calibration factors established per measurement point (3).

3. The method according to either one of the preceding claims, **characterized in that**
the coated surface (2) is irradiated with electromagnetic radiation in the wavelength range of infrared light, the spectrum of the backscattered radiation is detected, and the layer thicknesses are determined under consideration of the reflection and absorption properties of the surface (2) and of the layer (1) and also of the detected spectrum.

4. The method according to claim 3, **characterized in that**, whilst the layer (1) is being heated and melted, changes in the spectrum of the backscattered radiation are measured at least at one measurement point (3), and on this basis the end of the heating is determined.

5. The method according to any one of the preceding claims, **characterized in that** the thickness of a layer (1) on rough metal surfaces, preferably on a metal strip, is determined.

6. The method according to any one of the preceding claims, **characterized in that** a first and a second layer thickness of a layer (1) on a metal strip are determined at the start and/or at the end of a coil metal strip in order to establish a calibration factor.

7. The method according to any one of the preceding claims, **characterized in that** the layer (1) is formed as a dry lubricant from a mixture of oil(s) and wax(es).

8. The method according to any one of the preceding claims, **characterized in that**, when measuring the first layer thickness at a number of measurement points, the location of the layer thickness extrema and optionally at least one location representative for frequently occurring layer thicknesses are established, and **in that**, for melting, first the locations of the layer thickness extrema, and optionally then the location representative of the frequently occurring layer thicknesses are selected.

9. An apparatus for determining a layer thickness of an organic layer (1), which is permeable for electromagnetic radiation in the wavelength range of infrared light and which is formed from a material mixture, on a surface (2), by infrared spectroscopy, which apparatus comprises at least
a measuring device (4) for carrying out infrared spectroscopy, which measuring device has at least one radiation source (5) and a receiver assembly (7), and an evaluation unit (8) for determining the layer thickness depending on measurement signals of the receiver assembly (7),
**characterized in that** a heating device (9), which is designed to heat the layer (1) at least at one predefined measurement point (3) up to the melting point of the highest-melting material of the material mixture, is comprised, and
the evaluation unit (8) is designed
to determine, from the measurement signals at the at least one predefined measurement point (3), a first layer thickness before heating, and, once the layer (1) has fully melted and/or solidified, a second layer thickness and on that basis a calibration factor, and
to establish, from the calibration factor and measurement signals at an arbitrary point (11), the layer thickness at this arbitrary point (11).

10. The apparatus according to claim 9, **characterized in that** the measurement device (4) and/or the heating device (9) are movable over the surface (2) in a defined arrangement, preferably by means of a positioning device (10).

11. The apparatus according to either one of claims 9 or 10, **characterized in that** it has a control device (6), which is designed to control the processes in order to determine a calibration factor at least at one measurement point (3) and/or in order to determine a layer thickness at an arbitrary point (11) and/or in order to control the positioning of the positioning device (10).

12. The apparatus according to any one of claims 9 to 11, **characterized in that** a heating device (9) is an induction heater, an infrared heater, a hot air fan, or the radiation source (5) of the measuring device (4).

13. The apparatus according to any one of claims 9 to 12, **characterized in that** the radiation source (5) of the measuring device (4) is operable with undervoltage during the measurement of the spectrum of the backscattered radiation.

14. The apparatus according to one of claims 9 to 13, **characterized in that** the measuring device (4) and the heating device (9) are arranged together in a measurement head.

15. The apparatus according to any one of claims 9 to 14, **characterized in that** the surface is that of a metal strip, and **in that** a heating device for heating the layer (1) at the at least one measurement point (3) is provided above and below the metal strip.

## Revendications

1. Procédé de détermination d'une épaisseur de couche d'une couche (1) organique, laissant passer un rayonnement électromagnétique dans la plage de longueurs d'onde de la lumière infrarouge, formée à base d'un mélange de substances, sur une surface (2) par spectroscopie infrarouge, dans lequel
au moins une première épaisseur de couche est déterminée au moyen d'un dispositif de mesure (4) pour l'exécution d'une spectroscopie infrarouge au niveau d'au moins un point de mesure (3), et
la couche (1) est réchauffée jusqu'au point de fusion de la substance du mélange de substances ayant le point de fusion le plus élevé au niveau de l'au moins un point de mesure (3) au moyen d'un dispositif de chauffage (9), et
après la fusion complète et/ou après le figeage de la couche (1), on détermine une deuxième épaisseur de couche au niveau de l'au moins un point de mesure (3), et
à partir du rapport de la première épaisseur de couche sur la deuxième au niveau de l'au moins un point de mesure (3), on détermine un facteur d'étalonnage pour la détermination de l'épaisseur de la couche (1) au niveau de points quelconques de la surface (2) recouverte, et
l'épaisseur de la couche (1) au niveau d'un point quelconque (11) de la surface (2) est déterminée à partir d'une épaisseur de couche déterminée au niveau du point (11) quelconque au moyen du dispositif de mesure (4) et du facteur d'étalonnage.

2. Procédé selon la revendication 1, **caractérisé en ce qu'**un facteur d'étalonnage global est déterminé à partir de plusieurs facteurs d'étalonnage déterminés au niveau de points de mesure (3) distribués de manière relative par rapport à la surface (2), de préférence sur une ligne ou dans un motif, de préférence par le biais d'une valeur moyenne ou d'une fonction dépendante de l'épaisseur de la couche, à partir de ces facteurs d'étalonnage déterminés par point de mesure (3).

3. Procédé selon l'une des revendications précédentes, **caractérisé en ce que**
la surface (2) revêtue est éclairée avec le rayonnement électromagnétique dans la plage de longueurs d'onde de la lumière infrarouge, détecte le spectre du rayonnement réfléchi, et les épaisseurs de couche respectives sont déterminées en tenant compte des propriétés de réflexion et d'absorption de la surface (2) et de la couche (1) ainsi que du spectre détecté.

4. Procédé selon la revendication 3, **caractérisé en ce que**, pendant le réchauffement et la fusion de la couche (1), on mesure au niveau d'au moins un point de mesure (3) des modifications dans le spectre du rayonnement réfléchi et on en déduit la fin du réchauffement.

5. Procédé selon l'une des revendications précédentes, **caractérisé en ce que** l'épaisseur d'une couche (1) est déterminée sur des surfaces métalliques rugueuses, de préférence, sur une bande métallique.

6. Procédé selon l'une des revendications précédentes, **caractérisé en ce qu'**une première et une deuxième épaisseur de couche d'une couche (1) sont déterminées sur une bande métallique au début et/ou à la fin d'une bande métallique en rouleau pour la détermination d'un facteur d'étalonnage.

7. Procédé selon l'une des revendications précédentes, **caractérisé en ce que** la couche (1) est formée en tant que lubrifiant sec à base d'un mélange d'huile(s) et de cire(s).

8. Procédé selon l'une des revendications précédentes, **caractérisé en ce que**, lors de la mesure de la première épaisseur au niveau de plusieurs points de mesure, le lieu des épaisseurs de couche extrêmes et éventuellement, au moins un lieu représentatif pour des épaisseurs de couches se présentant souvent, sont déterminés et que, pour la fusion, on choisit d'abord les lieux des épaisseurs de couche extrêmes et éventuellement ensuite le lieu représentatif des épaisseurs de couches se présentant le plus souvent.

9. Dispositif de détermination d'une épaisseur de couche d'une couche (1) organique, laissant passer un rayonnement électromagnétique dans la plage de longueurs d'onde de la lumière infrarouge, formée à base d'un mélange de substances, sur une surface (2) par spectroscopie infrarouge, qui présente au moins
un dispositif de mesure (4) pour l'exécution d'une spectroscopie infrarouge qui présente au moins une source de rayonnement (5) et un ensemble récepteur (7), ainsi qu'une unité de traitement (8) permettant la détermination d'une épaisseur de couche en fonction de signaux de mesure de l'ensemble récepteur (7),
**caractérisé en ce qu'**un dispositif de chauffage (9), qui est conçu pour le réchauffement de la couche (1) au niveau d'au moins un point de mesure (3) jusqu'au point de fusion de la substance du mélange ayant le point de fusion le plus élevé, est compris et
l'unité de traitement (8) est conçue
pour déterminer, à partir des signaux de mesure au niveau de l'au moins un point de mesure (3) prédéfini, avant le réchauffage, une première épaisseur de couche, et après la fusion complète et/ou le figeage de la couche (1), une deuxième épaisseur de couche, et en déduire un facteur d'étalonnage, et
pour déterminer, à partir du facteur d'étalonnage et de signaux de mesure à un point (11) quelconque, l'épaisseur de couche à ce point (11) quelconque.

10. Dispositif selon la revendication 9, **caractérisé en ce que** le dispositif de mesure (4) et/ou le dispositif de chauffage (9), sont mobiles, de préférence au moyen d'un dispositif de positionnement (10) dans un arrangement défini sur la surface (2).

11. Dispositif selon l'une des revendications 9 ou 10, **caractérisé en ce qu'**il présente un dispositif de commande (6) qui est conçu pour commander les actions pour la détermination d'un facteur d'étalonnage au niveau d'au moins un point de mesure (3) et/ou pour la détermination d'une épaisseur de couche au niveau d'un point (11) quelconque et/ou le positionnement du dispositif de positionnement (10).

12. Dispositif selon l'une des revendications 9 à 11, **caractérisé en ce qu'**un dispositif de chauffage (9) est un appareil de chauffage par induction, un appareil de chauffage infrarouge, un ventilateur à air chaud ou une source de rayonnement (5) du dispositif de mesure (4).

13. Dispositif selon l'une des revendications 9 à 12, **caractérisé en ce que** la source de rayonnement (5) du dispositif de mesure (4) peut être mise en œuvre pendant la mesure du spectre du rayonnement réfléchi avec une sous-tension.

14. Dispositif selon l'une des revendications 9 à 13, **caractérisé en ce que** le dispositif de mesure (4) et le dispositif de chauffage (9) sont disposés ensemble au niveau d'une tête de mesure.

15. Dispositif selon l'une des revendications 9 à 14, **caractérisé en ce que** la surface est celle d'une bande métallique et un dispositif de chauffage est prévu au-dessus et en-dessous de la bande métallique pour le réchauffement de la couche (1) au niveau de l'au moins un point de mesure (3).
